# EUROPEAN PATENT APPLICATION

(11) **EP 2 123 419 A1**
(43) Date of publication of application: **25.11.2009**
(21) Application number: 08156617.6
(22) Date of filing: 21.05.2008
(51) Int. Cl.: B29C 41/04, B32B 5/20, B32B 27/32

(54) **Leisure boats prepared from foamed polyethylene.**

(71) Applicant: Total Petrochemicals Research Feluy, 7181 Seneffe (Feluy) (BE)
(72) Inventor: Maziers, Eric, B - 7180, Seneffe (BE)

(57) **Abstract**

This invention relates to the field of multilayer leisure boats having reinforced structural properies prepared by rotational moulding wherein the external and internal skin layers are prepared from polyethylene resin and the intermediate layer is prepared from foamed polyethylene resin.

## Description

This invention relates to the field of leaisure boats prepared from foamed polyethylene by rotomoulding.

Polyethylene represents more than 80 % of the polymers used in the rotomoulding market. This is due to the outstanding resistance of polyethylene to thermal degradation during processing, to its easy grinding, good flowability, and low temperature impact properties.

Rotomoulding is used for the manufacture of simple to complex, hollow plastic products. It can be used to mould a variety of materials such as polyethylene, polypropylene, polycarbonate polyamide, or polyvinyl chloride (PVC). Linear low density polyethylene is preferably used as disclosed for example in "Some new results on rotational molding of metallocene polyethylenes" by D. Annechini, E. Takacs and J. Vlachopoulos in ANTEC, vol. 1, 2001.

Polyethylenes prepared with a Ziegler-Natta catalyst are generally used in rotomoulding, but metallocene-produced polyethylenes are desirable, because their narrow molecular distribution allows better impact properties and shorter cycle time in processing.

The metallocene-produced polyethylenes of the prior art (see ANTEC, vol. 1, 2001) suffer from high shrinkage and warpage and for some applications from their whiteness in their natural state.

Plastoelastomeric compositions such as described in US-5,457,159 can also be used in rotomoulding, but they require complex processing steps of mixing and vulcanisation.

US-6,124,400 discloses the use for rotomoulding of polymer alloys containing semicrystalline polyolefin sequences with chains of different controlled microstructure prepared in a "one-pot" polymerisation process from a single monomer. The polymerisation of these polymer alloys requires a complex catalyst system comprising organometallic catalyst precursors, cationic forming cocatalysts and cross-over agents.

It is thus desired to produce articles prepared with two or more layers of similar or dissimilar material in order to improve the final properties of the finished product. It is however generally necessary to add a bonding layer or cross-linking in order to insure structural integrity.

There is thus a need to produce rotomoulded multilayer leisure boats that do not suffer from these drawbacks and that have a uniform smooth layer of foamed material.

It is an aim of the present invention to prepare multilayer rotomoulded leisure boats having good adherence between layers of dissimilar material.

It is also an aim of the present invention to prepare multilayer rotomoulded boats wherein one of the layer is foamed polyethylene.

It is another aim of the present invention to prepare large multilayer rotomoulded boats that can be processed easily and quickly.

It is a further aim of the present invention to prepare large multilayer rotomoulded boats having good stiffness and rigidity while keeping elasticity.

It is yet another aim of the present invention to prepare large multilayer rotomoulded boats having controlled wall thickness.

It is also an aim of the present invention to prepare large multilayer rotomoulded boats having controlled foam thickness.

Any one of these aims is at least partially fulfilled by the present invention.

Accordingly, the present invention provides multilayer rotomoulded boats comprising:
a) an external skin layer, that is a polyethylene composition, prepared from a dry blend of:
   i) from 20 to 99.9 wt% of a composition comprising a first metallocene-prepared homo- or co-polymer of ethylene, based on the weight of skin layer a) composition, from 0.1 to 60 wt% of ionomer or grafted polyolefin or a mixture thereof and from 0 to 60 wt% of functionalised polyolefin (FPO), or polyolefin (PO) grafted to non-polyolefin (NPO) in the form of a block copolymer (PO)g-NPO), or a mixture thereof:
   ii) from 0 to 79.9 wt% of a second metallocene-prepared homo- or co-polymer of ethylene having different density and/or melt index than the first metallocene-prepared homo- or co-polymer of ethylene,
b) an intermediate foamed polyethylene layer prepared from
   i) 95 to 99.8 wt% of a polyethylene composition, the same as or different from that of external skin layer a), said composition comprising an ionomer or grafted polyolefin or mixture thereof, and
   ii) from 0.2 to 5 wt% of chemical blowing agent
   and wherein the ionomer or grafted polyolefin or mixture thereof, blowing agent and metallocene-prepared polyethylene resin have a synergistic effect;
c) an internal skin layer, that is a polyethylene-based layer, prepared from a composition consisting of
   i) from 40 to 100 wt% of a metallocene-prepared homo- or copolymer of ethylene or a mixture thereof, based on the weight of skin layer b) composition, said polyethylene being the same as or different from that of external skin layer a); and
   ii) from 0 to 60 wt% of a functionalised polyolefin (FPO) or of an ionomer or of a polyolefin (PO) grafted to a non-polyolefin (NPO) in the form of a block copolymer (PO)g-(NPO), or of a mixture thereof;
d) optional layers.

Additional layers may be added in order to obtain desired properties such as for example creep resistance or high temperature resistance. These additional layers are preferably prepared from polyamide or ethylene/vinyl alcohol polymers (EVOH).

External skin layer a) comprises homopolymers or copolymers of ethylene and an ionomer and/or a grafted polyolefin. In this description, copolymers are prepared from one monomer and one or more comonomers. The polyethylene resin may advantageously be replaced by a dry blend of metallocene-prepared polyethylene resins i) and ii) having different properties in order to tailor the properties of the external skin layer.

The external skin layer composition a) preferably comprises a dry blend of from 20 to 80 wt% of first metallocene produced polyethylene i) and from 20 to 80 wt% of second metallocene produced polyethlene ii), based on the total weight of polyethylenes i) and ii). More preferably it comprises from 40 to 60 wt% of first metallocene produced polyethlene i) and from 40 to 60 wt% of second metallocene produced polyethlene ii),

In a preferred embodiment according to the present invention, the composition of external skin layer a) comprises from 70 to 99.9 wt%, based on the weight of skin layer a) composition, of the blend of first and second polyethylene resins, more preferably from 80 to 99 wt% and most preferably from 85 to 98 wt%, and preferably from 0.1 to 30 wt%, more preferably from 1 to 20 wt% and most preferably from 2 to 15 wt% of ionomer or grafted polyolefin or combination thereof.

Preferably, the composition of internal skin layer c) comprises from 90 to 100 wt%, based on the weight of skin layer b) composition and more preferably about 100 wt% of polyethylene, and preferably from 0 to 10 wt% and more preferably 0 wt% of ionomer or grafted polyolefin.

The grafted polyolefins, if present are polyolefins grafted with a material that provides polarity and/or reactivity and they therefore depend upon the nature of the adjacent layers. Preferably in the present invention, the polyolefins are grafted with anhydride and preferably, the polyolefin is polyethylene or polypropylene, more preferably, it is polyethylene. Alternatively, an ionomer is used. Grafted polyethylene provides excellent adhesion properties whereas ionomers enhance mechanical properties. In a more preferred embodiment according to the present invention, a mixture of ionomer and grafted polyethylene is added to the polyethylene composition.

The preferred polyethylene according to the present invention is a homo- or copolymer of ethylene produced with a catalyst comprising a metallocene on a silica/aluminoxane support. More preferably, the metallocene component is ethylene-bis-tetrahydroindenyl zirconium dichloride or dimethylsilylene-bis(2-methyl-4-phenyl-indenyl) zirconium dichloride. The most preferred metallocene component is ethylene-bis-tetrahydroindenyl zirconium dichloride.

The melt index of the first polyethylene resin a) i) preferably used in the present invention is typically at least equal to 0.5 dg/min, preferably of at least 1 dg/min. It is preferably at most equal to 25 dg/min, preferably of at most 20 dg/min. The melt flow index MI2 is measured following the method of standard test ASTM D 1283 at a temperature of 190°C and a load of 2.16 kg.

The melt index of the second polyethylene resin a) ii) preferably used in the present invention is typically of at least 1 dg/min, preferably of at least 5 dg/min. It is preferably of at most 30 dg/min, preferably of at most 25 dg/min.

The first homo- and co-polymers of ethylene a) i) that can be used in the present invention preferably have a density of at least 0.920 g/cc, preferably of at least 0.930 g/cc. It is of at most 0.965 g/cc, preferably of at most 0.960 g/cc. The density is measured following the method of standard test ASTM D 1505 at 23°C.

The density of the second polyethylene resin a) ii) preferably used in the present invention is typically of at least 0.930 g/cc, preferably of at least 0.935 g/cc. It is of at most 0.965 g/cc, preferably of at most 0.960 g/cc.

The density and melt index of internal skin layer c) are preferably in the same ranges as those of external skin layer a) i).

The polyethylene of the present invention may also have a bi- or multimodal molecular weight distribution, i.e. they may be a blend of two or more polyethylenes with different molecular weight distributions, which can be blended either physically or chemically, i.e. produced sequentially in two or more reactors.

The polydispersity D of the polyethylene suitable for the present invention is in the range 2 to 20, preferably 2 to 15, more preferably less than or equal to 10, and most preferably less than or equal to 6, the latter range being typically associated with the preferred metallocene-prepared polyethylene resins. The polydispersity index D is defined as the ratio Mw/Mn of the weight average molecular weight Mw over the number average molecular weight Mn.

The resins of the present invention may also comprise other additives such as for example antioxidants, acid scavengers, antistatic additives, fillers, slip additives or anti-blocking additives , processing aid.

The foamed polyethylene layer is prepared by standard techniques with chemical blowing agents, but it is characterised by the use of a metallocene-prepared polyethylene that includes an ionomer. It has been surprisingly observed that the combined use of metallocene-produced polyethylene including an ionomer with the blowing agent produces a very homogeneous and regular foam.

The composition may be prepared by extruding the polyethylene composition either with a masterbatch comprising the foaming agent or directly with the foaming agent. Alternatively, and preferably, the polyethylene composition and chemical blowing agent are dry blended and introduced directly into the mould during the rotomoulding cycle.

In order to foam polyethylene a blowing agent must fulfill several requirements:
- the decomposition temperature of the blowing agent is compatible with the processing temperature of the polymer;
- the liberation of the blowing gas occurs within a defined temperature range of about 10 °C and is controllable during the process;
- the decomposition is not autocatalysed in order to avoid overheating;
- the blowing gas is chemically inert, such as preferably nitrogen, carbon dioxide and water;
- the chemical blowing agent is homogeneously and easily incorporated in and compatible with polyethylene.

During foaming process, at elevated temperatures, chemical blowing agents undergo chemical reactions, mostly decomposition, that liberate the blowing gas, typically N₂, CO, CO₂, NH₃ and water.

The chemical agents that can be used in the present invention can function according to three main processes:
2. Irreversible reaction: AB --> C + gas. They can be selected from the group consisting of azo compounds, hydrazine derivatives, semicarbazides, tetrazoles and nitroso compounds.
3. Equilibrium reactions: AB <---> C + gas. They can be selected from the group consisting of bicarbonates and carbonates.
4. Combination of compounds that liberate gasses as a result of their chemical interactions: A + BG --> AB + gas.

The blowing agents can be:
- exothermic such as for example azodicarbonamide (AZ) or 4,4'-oxy-bis(benzenesulfonylhydrazide) (OB); or
- endothermic such as for example sodium bicarbonate (SB).

Azo compounds such as for example azodicarbonamide decompose at a temperature of from 160 to 215 °C and liberate about 220 ml/g of gas, mostly N₂, CO, CO₂, NH₃ and water.

Hydrazides such as for example or 4,4'-oxy-bis(benzenesulfonylhydrazide) decompose at a temperature of from 140 to 160 °C and liberate 120 to 140 ml/g of gas, mostly N₂ and H₂O. This type of agent is particularly preferred as it is exothermic and releases only neutral gases.

Carbonates such as for example NaHCO₃ in combination with citric acid decompose at a temperature of from 150 to 230 °C and liberate 140 to 230 ml/g of gas, mostly CO₂ and H₂O.

The amount of blowing agent is of at least 0.2 wt% based on the total weight of the foamed polyethylene composition of the intermediate layer, preferably of at least 1 wt%. It is of at most 5 wt%, preferably of at most 3 wt%. The most preferred amount is of about 2.5 wt%.

The exothermic agents have a much higher decomposition rate than the endothermic agents.

An ionomer is a polyelectrolyte that comprises copolymers containing both electrically neutral repeating units and a fraction of ionised units, usualy representing at most 15 percent of the polymer. They link in such a way that, even though they are stiff at room temperature, the bonds may be broken down thermally and the new linkages will cause the material to act as though it were a thermoplastic material. The ionic attractions that result strongly influence the polymer properties, especially its mechanical properties.

In an ionomer, the nonpolar chains are grouped together and the polar ionic groups are attracted to each other. This allows thermoplastic ionomers to act in ways similar to that of cross-linked polymers or block copolymers, but in fact they are called reversible cross-linkers. When heated, the ionic groups lose their attractions for each other and the chains become mobile. The chains motion increases with increasing temperature and the groups can no longer stay in their clusters. This produces a polymer that has the properties of an elastomer and the processability of a thermoplastic.

Suitable ionomers can for example be selected from poly(ethylene-co-methacrylic acid). This polymer is a sodium or zinc salt of copolymers derived from ethylene and methacrylic acid.

Grafted polyethylene provides excellent adhesion properties whereas ionomers enhance mechanical properties.

Multiple layers object can be prepared either by manual introduction of material during the moulding cycle, or by the use of a drop-box, or by a one-shot system.

Manual addition involves moving the mould from the oven, removing a vent tube or plug that creates an opening in the part and adding more material using a fennel or wand. This operation must be repeated for each additional layer.

A drop-box typically contains a single material layer and it is an insulated container that holds material until it is released at the appropriate time during the cycle. The signal for release of material is usually transmitted as a pressure pulse via the airline through the arm of the machine. The insulation must be kept cool to prevent the material inside the box from melting.

In either method, there are two critical factors:
- the temperature at which the subsequent layer is added: it is critical for determining the wall thickness of the previous skin formed and how well the two layers may be bound together;
- the time elapsed before addition of the subsequent layer of material: if the mould is at rest for too long, material that has already adhered to the wall may sag.

It is possible to reduce these problems by lowering the melt index of the first layer and/or by reducing the injection temperature of the next layer, and/or by cooling the mould slightly before injection or the next layer.

The cycle time necessary to produce multilayer rotomoulded articles depends upon the number of layers and upon the mass injected for each layer.

The present invention also discloses a method for preparing multilayer articles that comprises the steps of:
a) feeding the composition of external skin layer a) as a dry blend into a mould;
b) placing the filled mould in pre-heated oven;
c) rotating the filled mould about two perpendicular axes;
d) feeding the the composition of the foamed intermediate layer as a dry blend of polethylene composition and chemical blowing agent;
e) repeat steps b) and c);
f) feeding the composition of internal skin layer c);
g) repeat steps b) and c);
h) optionally feeding desired additional layers.

Alternatively, the chemical blowing agent can be introduced during the rotomoulding cycle by a teflon tube.

The first key point in the process is the time at which the temperature inside the mould reaches the melting temperature of the external polyethylene skin layer. The intermediate layer comprising polyethylene and foaming agent is injected as soon as or just before that first melting temperature is reached.

The second key point in the process is the time at which the temperature inside the mould reaches the melting temperature of the polyethylene composition/foaming agent composition. The internal polyethylene skin layer is injected as soon as or just before that second melting temperature is reached.

Preferably, the intermediate layer comprising polyethylene composition and foaming agent is injected between 4 and 7 minutes before the first melting temperature is reached.

Preferably, the internal polyethylene skin layer is injected between 10 and 20 minutes before the second melting temperature is reached.

Typically, the oven temperature is of from 280 to 300 °C. The temperature inside the mould must be compatible with the foaming temperature and is preferably of the order of 160 °C.

The mould is typically cooled with cold air.

This invention is particularly suitable for preparing articles that demand stiff and rigid walls such as for example boats and kayaks of from 4 to 10 m long, or the body of small to medium size cars, or large fuel tanks. This invention is particularly directed to leisure motor boats. The intermediate layer prepared with foamed polyethylene allows the preparation of thick-walled, light-weight articles. The finished articles are characterised by high impact resistance and good thermal and sound insulation. In addition, they keep sufficient elasticity to resist fracture under shock, contrary to equivalent articles prepared from polystyrene.

The thickness of each layer is determined by the size of the final product, by the desired properties and by the cost: it can vary from 0.5 mm up to several cm. In the present invention directed primarily to leisure boats, the external skin layer has a thickess of from 1 to 20 mm, the intermediate foamed layer has a thickness of a from 3 to 30 mm and the internal skin layer has a thickness of from 0.5 to 2.5 mm.

The resulting articles are characterised by an excellent stiffness.

The articles of the present invention are also completely recyclable: they can be reground and used in other applications.

### Example 1.

A three layer rotomoulded boat was prepared as follows.
- the internal skin layer was prepared with a metallocene-produced polyethylene sold by Total Petrochemicals under the name M3583 UV® and having a density of 0.934 g/cc and a melt index MI2 of 8 dg/min.
- the intermediate foamed polyethylene layer was prepared from a composition of 97.5 wt% of a metallocene-produced polyethylene sold by Total Petrochemicals under the name M3670® having a density of 0.941 g/cc and a melt index MI2 of 3.5 dg/min and of 2.5 wt% of chemical blowing agent sold by Lanxess Distribution GmbH under the nameGenitron OB®.
- the external skin layer was prepared from a composition of 50 wt% of M3583 UV® and 50 wt% of M3670®.

It must be noted that M3670® is a composition that includes an ionomer.

The finished rotomoulded article had an internal skin layer of 1 to 2 mm, an intermediate foamed layer of 10 to 12 mm and an external skin layer of 2 to 4 mm.

### Example 2.

Another three layer rotomoulded boat was prepared using the same method as that of example 1 except that in the external skin layer, M3583 UV® was replaced by another polyethylene resin sold by Total petrochemicals under the name M6091® that was added to polyethylene resin M3670® in powder form.

### Example 3.

Another three layer rotomoulded boat was prepared using the same method as that of example 2 except that in the external skin layer, polyethylene resin M6091® was added to polyethylene resin M3670® in pellet form.

## Claims

1. Multilayer rotomoulded leisure boats having reinforced structural properties comprising:
a) an external skin layer, that is a polyethylene composition, prepared from a dry blend of:
i) from 20 to 99.9 wt% of a composition comprising a first metallocene-prepared homo- or co-polymer of ethylene, based on the weight of skin layer a) composition, from 0.1 to 60 wt% of ionomer or grafted polyolefin or a mixture thereof and from 0 to 60 wt% of functionalised polyolefin (FPO), or polyolefin (PO) grafted to non-polyolefin (NPO) in the form of a block copolymer (PO)g-NPO), or a mixture thereof:
ii) from 0 to 79.9 wt% of a second metallocene-prepared homo- or co-polymer of ethylene having different density and/or melt index than the first metallocene-prepared homo- or co-polymer of ethylene,
b) an intermediate foamed polyethylene layer prepared from
i) 95 to 99.8 wt% of a polyethylene composition, the same as or different from that of external skin layer a), said composition comprising an ionomer or grafted polyolefin or mixture thereof, and
ii) from 0.2 to 5 wt% of chemical blowing agent and wherein the ionomer or grafted polyolefin or mixture thereof, blowing agent and metallocene-prepared polyethylene resin have a synergistic effect;
c) an internal skin layer, that is a polyethylene-based layer, prepared from a composition consisting of
i) from 40 to 100 wt% of a metallocene-prepared homo- or co-polymer of ethylene or a mixture thereof, based on the weight of skin layer b) composition, said polyethylene being the same as or different from that of external skin layer a); and
ii) from 0 to 60 wt% of a functionalised polyolefin (FPO) or of an ionomer or of a polyolefin (PO) grafted to a non-polyolefin (NPO) in the form of a block copolymer (PO)g-(NPO), or of a mixture thereof;
d) optional layers.

2. The rotomoulded leisure boat of claim 1 wherein the grafted polyolefin is grafted polyethylene.

3. The rotomoulded leisure boat of claim 1 or claim 2 wherein the metallocene-produced polyethylene is prepared with a bistetrahydroindenyl or a bisindenyl catalyst component.

4. The rotomoulded leisure boat of any one of the preceding claims 1 wherein the external skin layer composition comprises from 80 to 98 wt% of metallocene-produced polyethylene or mixture of metallocene-produced polyethylenes and from 2 to 20 wt % of ionomer or grafted polyethylene or a combination thereof.

5. The rotomoulded leisure boat of any one of the preceding claims 1 wherein the external skin layer composition a) comprises from 40 to 60 wt% of first metallocene produced polyethlene and from 40 to 60 wt% of second metallocene produced polyethlene, based on the total weight of polyethylene resins.

6. The rotomoulded leisure boat of any one of the preceding claims wherein internal skin layer c) contains 100 wt% polyethylene.

7. The rotomoulded leisure boat of any one of the preceding claims wherein the intermediate foamed layer comprises from 0.5 to 5 wt% of chemical blowing agent, based on the weight of the intermediate foamed layer.

8. The rotomoulded leisure boat of any one of the preceding claims wherein the chemical blowing agent is selected from exothermic agents selected from azodicarbonamide (AZ) or 4,4'-oxy-bis(benzenesulfonylhydrazide) (OB) or from endothermic agents selected from sodium bicarbonate (SB).

9. The rotomoulded leisure boats of any one of the preceding claims wherein typical wall thicknesses are respectively of:
- from 1 to 20 mm for the external skin layer;
- from 3 to 30 mm for the intermediate foamed layer;
- from 0.5 to 2.5 mm for the internal skin layer.

10. A method for preparing the multilayer leisure boats of any one of claims 1 to 9 that comprises the steps of:
i) feeding the composition of external skin layer a) as a dry blend into a mould;
j) placing the filled mould in pre-heated oven;
k) rotating the filled mould about two perpendicular axes;
I) feeding the the composition of the foamed intermediate layer as a dry blend of polethylene composition and chemical blowing agent;
m) repeat steps b) and c);
n) feeding the composition of internal skin layer c);
o) repeat steps b) and c);
p) optionally feeding desired additional layers.
